# EUROPÄISCHE PATENTSCHRIFT

(11) **EP 1 726 468 B1**
(45) Veröffentlichungstag und Bekanntmachung des Hinweises auf die Patenterteilung: **02.04.2008**
(21) Anmeldenummer: 06006088.6
(22) Anmeldetag: 24.03.2006
(51) Int. Cl.: B60J 10/08, B60J 10/00

(54) **Dichtungsvorrichtung**
Sealing device
Dispositif d'étanchéité

(30) Priorität: 25.05.2005 DE 102005024035
(43) Veröffentlichungstag der Anmeldung: 29.11.2006
(73) Patentinhaber: Fahrzeugwerk Bernard Krone GmbH, 48480 Spelle (DE)
(72) Erfinder: Krone, Bernard, Dr., 48480 Spelle (DE); Sasse, Uwe, 49716 Meppen (DE); Pedersen, Henrik, 8600 Silkeborg (DK)
(74) Vertreter: Pott, Ulrich

(56) Entgegenhaltungen:
- EP-A- 0 555 115
- US-A- 4 119 325
- US-A1- 2004 094 906
- US-B1- 6 478 308

## Beschreibung

Die Erfindung bezieht sich auf eine Dichtungsvorrichtung für beispielsweise Schließ- und Wandungsteile für Fahrzeugaufbauten mit zumindest einem an einem Basiskörper abstützbaren Dichtelement, wobei an dem Basiskörper zumindest eine Halterung zur Festlegung von zumindest einem Dichtungsteil mit einem daran befestigten Dichtungselement vorgesehen ist.

Dichtungsvorrichtungen der vorgenannten Art sind in vielfältiger Ausgestaltung bekannt und haben beispielsweise als Dichtungsvorrichtungen von Schließ- und Wandungsteilen von Fahrzeugaufbauten einen Basiskörper aus Metall oder einem harten Kunststoffmaterial, an dem an unterschiedlichen Stellen und in unterschiedlicher Ausrichtung, Dicke und Gestaltung zumindest ein lippenförmiges Dichtelement angebracht ist.

Die Dichtelemente sind im rauhen Alltagsbetrieb von Fahrzeugaufbauten enormen Beanspruchungen ausgesetzt, so daß diese Dichtungsvorrichtung als Verschleißteile anzusehen sind mit einem relativ häufigen Austauschbedarf. Das führt zu nicht unerheblichen Stillstandzeiten solcher Fahrzeuge mit entsprechenden Aufbauten, weil jeweils die kompletten Dichtungsvorrichtungen demontiert und gegen neue ausgetauscht werden müssen. Damit geht im übrigen einher, daß bei Verschleiß der Dichtelemente der ansonsten noch intakte Basiskörper zu entsorgen ist. Das führt im Alltagsbetrieb solcher Fahrzeugaufbauten zu nicht unerheblichen Ersatzteilkosten.

Aus der US-A-4,119,325 ist eine Dichtungsvorrichtung der eingangs genannten Art bekannt, die ein Dichtelement aufweist, das an einem Basiskörper über ein Klammerteil festzulegen ist. Im Verschleißfalle ist dieses nach Entfernen des Klammerteils auszutauschen. Nachteil hierbei ist, daß lediglich über das Klammerteil die Verbindung des Dichtelementes mit Basiskörper ermöglicht ist. Eine hochfeste Verbindung zwischen einem metallischen Basiskörper und dem Dichtelement ist damit jedoch nicht zu vollziehen. Insbesondere sind auch im Befestigungsbereich Verformungen aufgrund des Dichtelementmaterials möglich, was zu Lageungenauigkeiten des Dichtelementes führen kann.

Aus der EP 0 555 115 A1 ist eine zweiteilige Dichtungsanordnung bekannt, die einen Basiskörper aufweist und ein an diesem zu befestigendes Dichtelementbauteil, das eine Basisplatte sowie daran befestigte Dichtelemente trägt. An dem Basiskörper der Dichtungsvorrichtung selbst sind keinerlei Dichtelemente vorzusehen, so daß es hierbei notwendig ist, auch bei Erstbenutzung der Dichtungsvorrichtung den zwei- bzw. dreiteiligen Aufbau der Dichtungsvorrichtung vorzusehen. Damit ist diese Dichtungsvorrichtung aufwändig.

Aus der US 2004/094906 A1 ist eine mehrteilige Dichtung bekannt, die ineinander greifende Dichtungsteile aufweist. Diese sind durch die abzudichtenden Bauteile gegeneinander zu drücken und können im Bedarfsfall einzeln ausgetauscht werden. Diese sind jedoch nicht fest an dem abzudichtenden Bauteil vorzusehen, so daß es sich um eine andere Art einer Dichtungsvorrichtung handelt.

Aus der US 6,478,308 B1 ist schließlich eine Dichtungsanordnung bekannt, die einen Basiskörper und daran zu befestigende Dichtelemente aufweist. Im Verschleißfalle muß die gesamte Dichtungsvorrichtung ausgetauscht werden.

Es ist Aufgabe der vorliegenden Erfindung, eine Dichtungsvorrichtung der eingangs genannten Art dahingehend weiterzuentwickeln, daß diese im Reparaturfall geringere Ersatzteilkosten verursacht.

Zur Lösung dieser Aufgabe zeichnet sich die Dichtungsvorrichtung der eingangs genannten Art dadurch aus, daß das Dichtungsteil seinerseits einen Basiskörper mit daran befestigtem Dichtungselement sowie zumindest eine Gegenhalterung für die Halterung des Basiskörpers der Dichtungsvorrichtung aufweist und daß sich der Basiskörper des Dichtungsteils im montierten Zustand über Festlegungsbereiche des Dichtungselementes am Basiskörper im Urzustand hinweg erstreckt und seinerseits zumindest ein Dichtungselement in kongruenter Anordnung zu dem ursprünglich am Basiskörper festgelegten Dichtelement trägt.

Damit ist eine Dichtungsvorrichtung geschaffen, bei der im Falle des Verschleißes von wenigstens einem Dichtelement ein wesentlich kostengünstigeres Dichtungsteil bzw. ein Reparaturset an dem Basiskörper festzulegen ist, das einen weitaus einfacheren grundsätzlichen Aufbau haben kann als der Basiskörper selbst, wobei jedoch das von diesem getragene Dichtungselement völlig neu ist und genauso wie das ursprünglich vorgesehene Dichtungselement die voll funktionstauglichen Dichtungsaufnahmen übernehmen kann.

Der Basiskörper kann jedoch montiert bleiben. Es ist lediglich dafür Sorge zu tragen, daß das Dichtelement bei diesem entfernt werden und alsdann das Reparatur- bzw. Dichtungsteil vorzusehen ist. Damit sind nicht nur die Kosten im Reparaturfall wesentlich zu verringern. Darüber hinaus sind die Reparaturzeiten und damit auch die Stillstandzeiten eines Fahrzeugaufbaus bzw. des Fahrzeuges, das diesen erträgt, wirkungsvoll zu verringern. Auch die Entsorgungskosten und der Entsorgungsaufwand ist um ein deutliches Maß verringert.

Vorteilhafterweise weist eine solche Dichtungsvorrichtung an einem Basiskörper mit Abstand voneinander abstützbare Dichtelemente auf, wobei an dem Basiskörper Halterungen zur Festlegung des Dichtungsersatzteils mit daran befestigten Dichtungselementen vorgesehen sind. Das Dichtungsteil kann so noch besser befestigt werden und seine Dichtungsfunktion aufgrund der Unterteilung des im Bereich des Dichtungsersatzteils befindlichen Raumes besser erfüllen.

Bevorzugtermaßen sind auch mehrere Halterungen in dem Basiskörper als nutenförmige Ausnehmungen ausgebildet, in die entsprechende Gegenhalterungen, beispielsweise Schnappverschlüsse bzw. Harpunensteghalter einzuschnappen sind. Die hierfür vorzusehenen Dichtelemente können an den Stellen bei dem jeweiligen Reparaturset angeordnet sein, an denen die ursprünglichen Dichtelemente vorgesehen waren.

Hinsichtlich wesentlicher weiterer Ausgestaltungen wird auf weitere Unteransprüche, die Beschreibung und die Zeichnung verwiesen. In der Zeichnung zeigen:

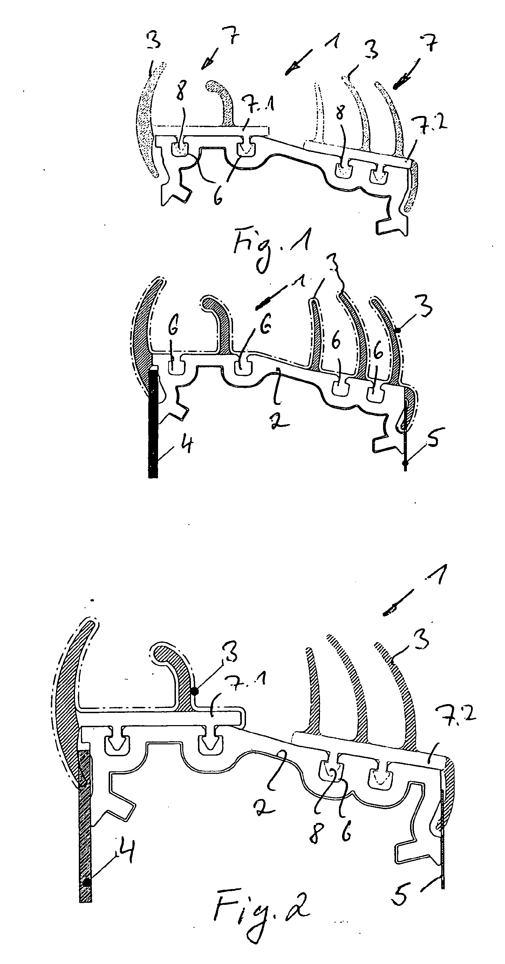

- Fig. 1, unten: ein Ausführungsbeispiel einer Dichtungsvorrichtung in ihrem ursprünglichen Zustand;
- Fig. 1, oben: das Ausführungsbeispiel nach Fig. 1 im reparierten Zustand;
- Fig. 2: die Darstellung nach Fig. 1 oben vergrößert, und
- Fig. 3: ein Dichtungsteil vergrößert.

Der Zeichnung sind grundsätzlich gleichwirkende Teile mit übereinstimmenden Bezugsziffern versehen. Allgemein mit 1 ist die Dichtungsvorrichtung beziffert, die einen Basiskörper 2 aufweist, der z.B. aus einem Kunststoffmaterial besteht, aber auch metallische Bereiche aufweisen kann. Wie in Fig. 1, unten dargestellt, sind an diesem Basiskörper mit Abstand voneinander verschiedene Dichtungselemente 3 angeordnet, die in verschiedenen Bereichen z.B. eines Fahrzeugaufbaus, wie bei 4 und 5 angedeutet, abdichten können. Je nach den Dichtungsaufgaben haben die Dichtungselemente eine entsprechende Längenerstreckung, eine entsprechende Kontur und dgl.

Um im Verschleißfall von Dichtungselementen 3 nicht die gesamte Dichtungsvorrichtung austauschen zu müssen, weist der Basiskörper Halterungen 6 in Gestalt von Nuten auf, die zwischen einzelnen Dichtungselementen 3 gelegen sind.

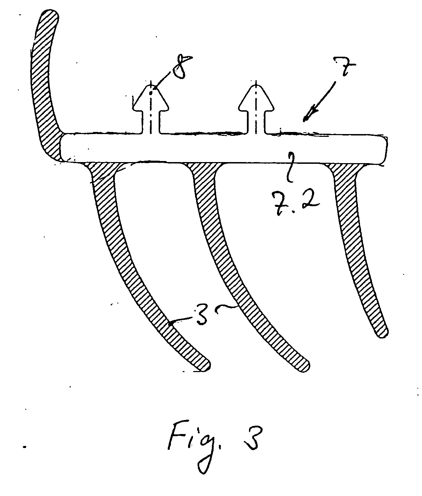

Wie in den Fig. 1, oben und vergrößert in Fig. 2 dargestellt, kann ein Dichtungsteil, das vergrößert in Fig. 3 gezeigt und allgemein mit 7 beziffert ist, in diese Halterungen 6 eingesetzt werden, so daß der Basiskörper 2 der Dichtungsvorrichtung weiter genutzt werden kann. In dem veranschaulichten Ausführungsbeispiel nach den Fig. 1, oben und Fig. 2 sind anstelle der ursprünglich vorgesehenen Dichtungselemente 3 (Fig. 1, unten) zwei Dichtungsteile 7.1 und 7.2 vorgesehen, die ihrerseits mit Dichtungselementen 3 versehen sind. Dazu haben die Dichtungsteile 7,7.1,7.2 Gegenhalterungen in Gestalt von Schnappverschlüssen bzw. Harpunenstegbefestigungen 8, die in die entsprechenden Nuten 6 des Basiskörpers 2 einzusetzen sind. Die Dichtungselemente 3 sind an dem Ersatzteil 7 dort befestigt, wo sie sich nach Montage der Teile exakt an den Stellen mit in völlig analoger Gestaltung und Längenerstrekkung dort befinden, wo sich im Urzustand (Fig. 1, unten) die ursprünglichen vorgesehenen Dichtungselemente 3 befunden haben. Damit ist eine Dichtungsvorrichtung geschaffen, bei der der Basiskörper 2 über lange Zeiten hinweg genutzt werden kann und je nach Verschleißzustand einzelne Dichtungselemente über das Ersatzteil ausgetauscht werden können.

## Patentansprüche

1. Dichtungsvorrichtung für beispielsweise Schließ- und Wandungsteile für Fahrzeugaufbauten mit zumindest einem an einem Basiskörper (2) abstützbaren Dichtelement (3), wobei an dem Basiskörper (2) zumindest eine Halterung (6) zur Festlegung von zumindest einem Dichtungsteil mit einem daran befestigten Dichtungselement (3) vorgesehen ist, **dadurch gekennzeichnet, daß** das Dichtungsteil (7) seinerseits einen Basiskörper (7.1, 7.2) mit daran befestigtem Dichtungselement (3) sowie zumindest eine Gegenhalterung (8) für die Halterung (6) des Basiskörpers (2) der Dichtungsvorrichtung (1) aufweist und daß sich der Basiskörper (7.1, 7.2) des Dichtungsteils (7) im montierten Zustand über Festlegungsbereiche des Dichtungselementes (3) am Basiskörper (2) im Urzustand hin weg erstreckt und seinerseits zumindest ein Dichtungselement (3) in kongruenter Anordnung zu dem ursprünglich am Basiskörper (2) festgelegten Dichtelement trägt.

2. Dichtungsvorrichtung nach Anspruch 1, **dadurch gekennzeichnet, daß** der Basiskörper (2) eine nutenförmige Ausnehmung als Halterung (6) zur Festlegung des Basiskörpers (7.1, 7.2) aufweist.

3. Dichtungsvorrichtung nach Anspruch 1 oder 2, **dadurch gekennzeichnet, daß** der Basiskörper (7.1, 7.2) des Dichtungsteils (7) seinerseits lösbar mit dem Basiskörper (2) verbindbar ist.

4. Dichtungsvorrichtung nach Anspruch 3, **dadurch gekennzeichnet, daß** der Basiskörper (7.1, 7.2) des Dichtungsteils (7) eine Harpunenstegbefestigung aufweist.

5. Dichtungsvorrichtung nach einem der Ansprüche 1 bis 4, **dadurch gekennzeichnet, daß** der Basiskörpers (7.1, 7.2) des Dichtungsteils (7) voneinander beabstandete Dichtungselemente (3) aufweist.

## Claims

1. Sealing device for, for example, closing and wall components for vehicle bodies, having at least one sealing element (3) able to be supported on a base body (2), there being provided in or on the base body (2) at least one mounting means (6) to secure in place at least one seal part having a sealing element (3) fixed thereto, **characterised in that** the seal part (7) itself has a base body (7.1, 7.2) having a sealing element (3) fixed thereto and at least one mating mounting means (8) for the mounting means (6) of the base body (2) of the sealing device (1), and **in that**, in the fitted state, the base body (7.1, 7.2) of the seal part (1) extends beyond regions in which the sealing element (3) was secured to the base body (2) in the original state and itself carries at least one sealing element (3) which is arranged to be congruent with the sealing element which was originally secured to the base body (2).

2. Sealing device according to claim 1, **characterised in that** the base body (2) has a groove-like recess as a mounting means (6) for securing the base body (7.1, 7.2) in place.

3. Sealing device according to claim 1 or 2, **characterised in that** the base body (7.1, 7.2) of the seal part (7) can itself be detachably connected to the base body (2).

4. Sealing device according to claim 3, **characterised in that** the base body (7.1, 7.2) of the seal part (7) has a fixing means in the form of a barbed bead.

5. Sealing device according to one of claims 1 to 4, **characterised in that** the base body (7.1, 7.2) of the seal part (7) has sealing elements (3) which are spaced away from one another.

## Revendications

1. Dispositif d'étanchéité, par exemple pour des parties de fermeture et de paroi pour des structures de véhicule, avec au moins un élément d'étanchéité (3) pouvant s'appuyer sur un corps de base (2), dans lequel il est prévu sur le corps de base (2) au moins un support (6) pour immobiliser au moins une partie d'étanchéité sur laquelle est fixé un élément d'étanchéité (3), **caractérisé en ce que** la partie d'étanchéité (7) comporte de son côté un corps de base (7.1, 7.2) sur lequel est fixé un élément d'étanchéité (3) ainsi qu'au moins un support opposé (8) pour le support (6) du corps de base (2) du dispositif d'étanchéité (1) et **en ce que** le corps de base (7.1, 7.2) de la partie d'étanchéité (7) s'étend à l'état monté au-dessus de zones d'immobilisation de l'élément d'étanchéité (3) sur le corps de base (2) dans l'état initial et porte de son côté au moins un élément d'étanchéité (3) en une disposition qui coïncide avec l'élément d'étanchéité immobilisé initialement sur le corps de base (2).

2. Dispositif d'étanchéité selon la revendication 1, **caractérisé en ce que** le corps de base (2) présente un évidement en forme de rainure comme support (6) pour l'immobilisation du corps de base (7.1, 7.2).

3. Dispositif d'étanchéité selon la revendication 1 ou 2, **caractérisé en ce que** le corps de base (7.1, 7.2) de la partie d'étanchéité (7) peut de son côté être assemblé de manière séparable au corps de base (2).

4. Dispositif d'étanchéité selon la revendication 3, **caractérisé en ce que** le corps de base (7.1, 7.2) de la partie d'étanchéité (7) comprend une fixation à nervure de harpon.

5. Dispositif d'étanchéité selon l'une quelconque des revendications 1 à 4, **caractérisé en ce que** le corps de base (7.1, 7.2) de la partie d'étanchéité (7) comprend des éléments d'étanchéité (3) espacés les uns des autres.
